# FASCICULE DE BREVET EUROPEEN

(11) **EP 0 322 330 B1**
(45) Date de publication et mention de la délivrance du brevet: **21.07.1993**
(21) Numéro de dépôt: 88440111.8
(22) Date de dépôt: 23.12.1988
(51) Int. Cl.: F23B 5/04, F23L 15/00, F23L 9/04, F23L 7/00

(54) **Procédé de combustion améliorée à déclenchement rapide et moyens pour le mettre en oeuvre dans un appareil de chauffage et d'incinération**
Verbrennungsverfahren mit schneller Auslösung und Mittel zu dessen Durchführung in einer Heiz- und Verbrennungsvorrichtung
Quick release combustion process and means for carrying out the process in a heating and incineration device

(30) Priorité: 23.12.1987 FR 8718257
(43) Date de publication de la demande: 28.06.1989
(73) Titulaire: FONDIS, S.A., F-68800 Thann (FR)
(72) Inventeur: Richard, Robert, F-68800 Thann (FR); Prado, Gilles, F-68290 Rimbach près Masevaux (FR)
(74) Mandataire: Metz, Paul

(56) Documents cités:
- EP-A- 0 235 370
- WO-A-80/02055
- FR-A- 2 427 481
- US-A- 3 267 890

## Description

La présente invention se rapporte à un procédé de combustion améliorée à déclenchement rapide pour appareils de chauffage à combustibles solides et pour incinérateurs. Elle se rapporte également aux moyens destinés à le mettre en oeuvre.

Plus particulièrement, l'invention se rapporte à un procédé selon la première partie de la revendication 1. Un tel procédé est divulgué par le document EP-A-0 235 370.

La pollution de l'air atteint, dans certaines régions et sous certaines conditions climatiques, des taux élevés notamment en hiver, saison où les appareils de chauffage fonctionnent le plus fréquemment à allure maximale.

Devant cette menace pour l'environnement et les êtres humains, il y a lieu d'abaisser notablement le taux d'émission des appareils de chauffage et incinérateurs en émanations polluantes.

Les taux des gaz polluants devraient descendre en-dessous d'un seuil notablement plus bas que celui atteint actuellement par les appareils courants.

De nombreux dispositifs et procédés ont été imaginés pour réduire les taux des matières volatiles et gaz présents dans les fumées et gaz de combustion de façon à diminuer la pollution atmosphérique, d'augmenter le rendement et de réduire les risques de feux de cheminée.

On connaît ainsi les catalyseurs qui provoquent chimiquement la réaction d'oxydation nécessaire pour permettre la combustion complète des matières volatiles inflammables s'échappant avec les fumées afin d'obtenir des composés neutres et stables non ou suffisamment peu polluants pour être tolérés.

Ces catalyseurs, lorsqu'ils fonctionnent bien, possèdent un rendement d'épuration satisfaisant. Ils présentent toutefois plusieurs défauts notablement importants qui en limitent l'usage ou qui leur feront préférer d'autres types de dispositifs ou systèmes procurant les mêmes effets.

Leur prix de revient élevé constitue le premier désavantage. En effet, les métaux rares garnissant les cellules, employés pour la réaction de catalyse, sont chers.

De plus, l'utilisation du catalyseur nécessite plusieurs précautions d'emploi et obligations particulièrement astreignantes venant s'ajouter au travail de préparation et d'entretien du feu.

Il s'agit d'abord de la mise systématique hors circuit du catalyseur lors du démarrage sous peine de détérioration de la cartouche par colmatage des cellules. Cette détérioration nécessite le remplacement de la cartouche active.

Il s'agit ensuite de ne pas surchauffer pour éviter d'endommager la surface supportant le catalyseur. Ce danger, de caractère particulièrement insidieux, est amplifié par la forte chaleur dégagée par la postcombustion forcée.

On connaît, par ailleurs, des dispositifs et procédés de neutralisation des gaz polluants de combustibles, notamment solides.

Il s'agit de complexes gazeux catalytiques mélangés à l'air comburant et injectés dans le foyer pour produire une réaction catalytique qui améliore la combustion et corrélativement diminue la production de matières volatiles et gaz imbrûlés issus de la combustion.

Ce système nécessite l'adjonction de conduits et d'une centrale de production de ces complexes gazeux. Son emploi sur de petits appareils de chauffage s'avère quasi impossible pour des raisons d'ordre économique.

On connaît également la neutralisation chimique des gaz de combustion en sortie du foyer.

Malheureusement, si ces procédés donnent de bons résultats, ils s'avérent totalement inexploitables à l'échelle domestique, c'est-à-dire familiale.

On connaît finalement des foyers présentant un volume de postcombustion situé en partie supérieure de la chambre de combustion.

Ce volume ne peut donner satisfaction en raison de son emplacement et de sa conformation, car on ne peut commander une postcombustion dans le foyer sans perturber grandement la combustion même qui doit rester la meilleure possible dans le foyer.

La présente invention a pour but de remédier à tous les divers inconvénients des procédés et dispositifs indiqués ci-dessus.

A cet effet, l'invention propose un procédé de combustion selon la revendication 1.

Les nombreux avantages de l'invention sont les suivants :
. aucun dispositif à travers le conduit d'évacuation des fumées ;
. rendement thermique maximal ;
. taux de pollution particulièrement bas ;
. plus-value raisonnable ;
. suppression de toute manipulation astreignante;
. diminution de la corrosion ;
. ensemble compact ;
. récupération d'énergie avec des moyens simples et fiables ;
. pas de détérioration : durée de vie égale à celle du foyer ;
. déclenchement rapide de la postcombustion.

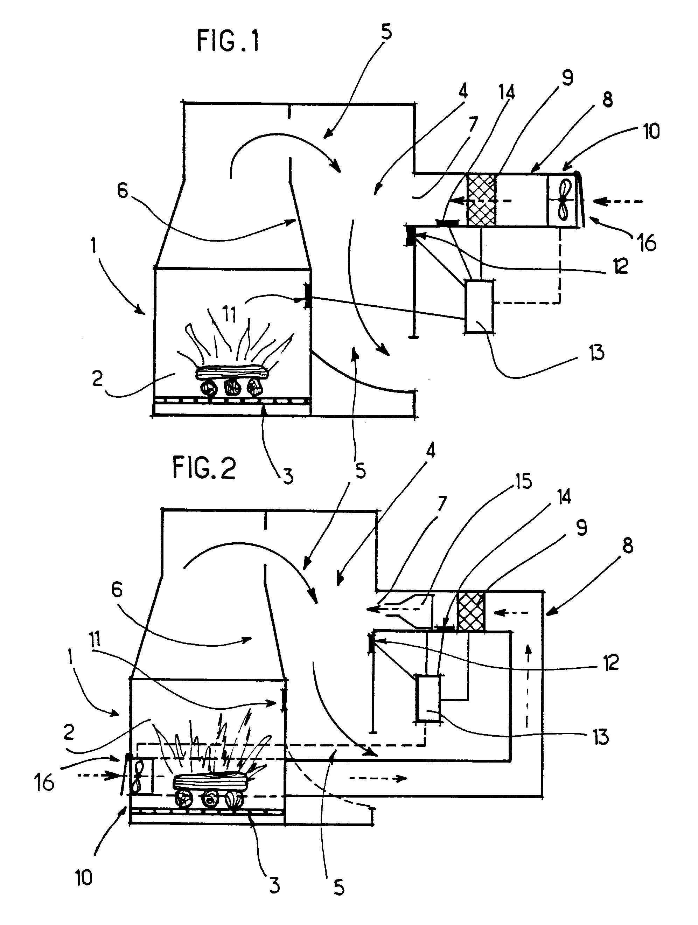

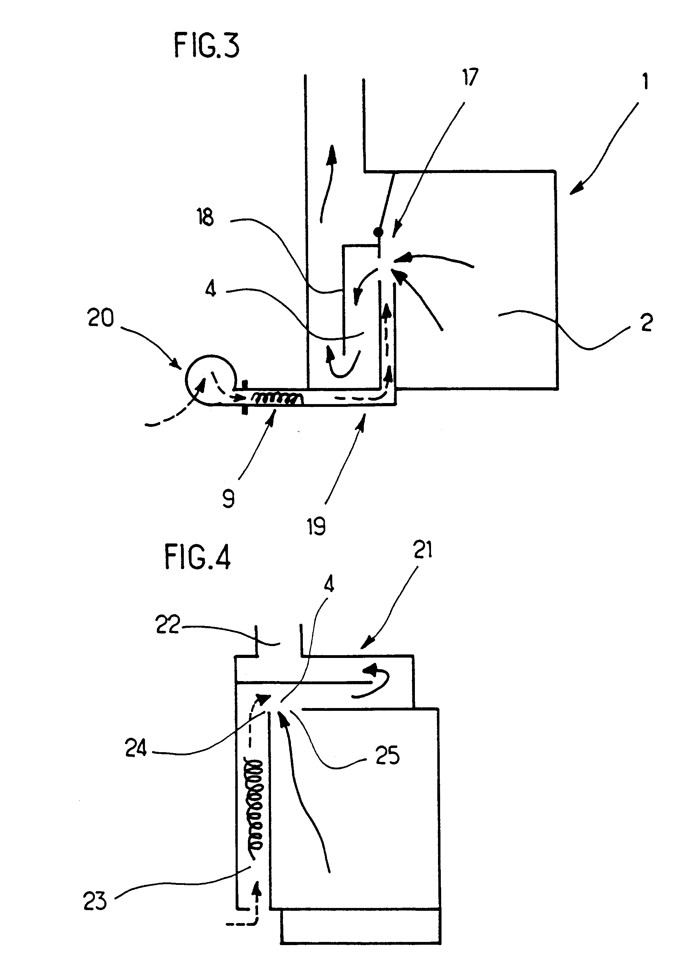

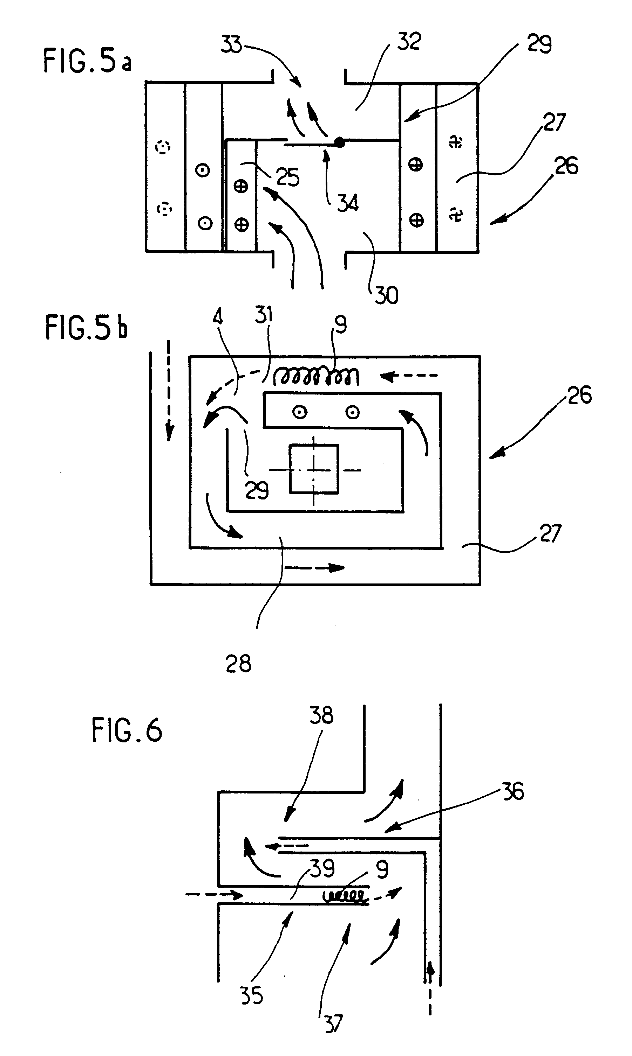

L'invention sera bien comprise à la lecture de la description qui suit effectuée à titre d'exemple non limitatif sur un mode d'exécution en référence aux dessins accompagnants dans lesquels :
. La figure 1 est une vue schématique en coupe verticale d'un foyer fermé de cheminée avec chambre de postcombustion attenante au foyer conforme à l'invention ;
. la figure 2 est une vue schématique en coupe verticale d'un foyer fermé de cheminée avec chambre de postcombustion et injection d'un courant d'air préchauffé enrichi en oxygène actif ou en ozone ;
. la figure 3 est une coupe verticale d'un foyer fermé équipé d'une chambre de postcombustion intégrée latéralement au foyer ;
. la figure 4 est une coupe verticale d'un foyer fermé équipé d'une chambre de postcombustion supérieure au foyer ;
. les figures 5a et 5b sont des vues en coupe, respectivement verticale et horizontale, d'un ensemble modulaire à circuits concentriques constituant un module de postcombustion avec échangeur à monter sur un foyer fermé de cheminée ;
. les figures 6, 7, 8 sont les schémas caractéristiques des circuits aérauliques d'air neuf, en traits pointillés, et de fumées, en traits gros, entre le foyer, la chambre de postcombustion et la sortie des fumées dans la cheminée :
   - la figure 6 est une vue schématique en coupe du circuit d'amenée d'air neuf dans une version dite à postcombustion étagée, mettant en oeuvre des canaux séparés ;
   - la figure 7 est une vue schématique en coupe du circuit d'amenée d'air neuf dans une version dite à postcombustion mettant en oeuvre un canal double ;
   - la figure 8 est une vue schématique en coupe horizontale d'une chambre de postcombustion dans le conduit de sortie des fumées avec représentation du circuit d'amenée d'air neuf attenant.

L'idée générale inventive consiste à injecter, au moins à un niveau, dans une chambre de postcombustion située le plus près possible de la sortie du foyer un courant d'air neuf, c'est-à-dire d'air comburant préchauffé puis porté rapidement, par au moins un moyen de chauffage indépendant extérieur au foyer, à au moins 400° C, de préférence 500° C, associé à la chaleur provenant du foyer, dès le démarrage de la combustion jusqu'à l'auto-entretien de la postcombustion, à continuer à injecter ce flux d'air neuf à une température plus faible, au moins égale à 200° C puis à reporter sa température à au moins 400 °C, par exemple 500° C, au moins à chaque activation ou réactivation du feu jusqu'au régime d'auto-entretien de la postcombustion puis à continuer à injecter ce courant d'air neuf à une température plus faible, par exemple en supprimant le moyen de chauffage indépendant.

Selon une variante, on injecte de l'air enrichi en oxygène simple, actif ou activé ou enrichi d'un gaz ou d'un complexe gazeux, catalytique ou oxydant, favorisant la combustion.

Selon une autre variante, la chambre de postcombustion est attenante au foyer ou intégrée au foyer.

Selon une autre variante encore de ce procédé, l'enrichissement de l'air est réalisé à l'aide d'ozone produit par un générateur au niveau de l'ouverture d'injection dans la chambre de postcombustion.

On s'affranchit ainsi des fluctuations de la température du foyer par un moyen de chauffage indépendant extérieur au foyer.

On décrira ci-après plus particulièrement le procédé de postcombustion selon l'invention puis dans une deuxième partie les divers moyens destinés à le mettre en oeuvre et quelques unes de leurs variantes sur un exemple de foyer fermé de cheminée et de poêle utilisant comme combustible du bois.

Bien entendu, les appareils utilisant d'autres combustibles conviennent également. C'est le cas du charbon, des déchets domestiques et industriels et des ordures ménagères dans les incinérateurs.

Plus particulièrement, le procédé consiste à déclencher la postcombustion le plus rapidement possible après le début de la combustion du combustible solide, en injectant rapidement, dans la chambre de postcombustion située à proximité du foyer, le plus près possible de celui-ci, notamment à proximité de la sortie des fumées du foyer, un air neuf comburant, c'est-à-dire contenant une quantité d'oxygène suffisante, enrichi ou non, activé ou non, préalablement porté à une température de déclenchement d'au moins 400°C, par exemple 500 °C.

Cet air est porté à la température de déclenchement d'au moins 400°C, par exemple 500° C, totalement ou au moins partiellement par un moyen de chauffage indépendant du foyer, par exemple par chauffage électrique à faible inertie thermique, de manière à déclencher la postcombustion dans le délai le plus court possible après le début de la combustion du bois.

Pour des raisons d'économie d'énergie, on prévoit de préchauffer l'air jusqu'à, par exemple, une température comprise entre 200°C et 400°C par un circuit d'amenée de l'air neuf en contact direct ou indirect avec au moins une paroi du foyer.

Ce préchauffage n'est utile et efficace que dans la phase immédiatement postérieure à la phase initiale, quand la chaleur de la combustion s'est transmise au circuit aéraulique de préchauffage et permet de chauffer l'air neuf.

Au cours de la phase initiale, le chauffage indépendant électrique joue le rôle principal. Il convient donc de renforcer son action tout en diminuant son inertie.

Pour ce faire, on obture partiellement l'entrée d'air neuf frais, car extérieur au foyer, pendant la montée en chaleur de l'élément chauffant électrique. On évite ainsi d'apporter à cet élément de l'air extérieur à une température trop basse par rapport à celle à atteindre.

Au fur et à mesure du chauffage du circuit d'amenée de l'air neuf par la montée en chaleur du foyer, on pourra ouvrir totalement ou progressivement l'entrée d'air.

A titre d'exemple illustratif de fonctionnement, on citera ci-après les différentes caractéristiques de fonctionnement correspondant à un cas réel typique de combustion d'un bois courant pendant une durée d'observation limitéé à 4 heures dans un foyer fermé de cheminée.

Les conditions générales et résultats sont les suivants:
. bois : hêtre d'humidité relative égale à 35 %
. mise en route des résistances électriques : cinq minutes pour le préchauffage et quatre minutes pour le chauffage
. durée de fermeture de l'entrée d'air neuf : cinq minutes
. intervalle de temps de déclenchement de la postcombustion à chaud : quatre minutes
. intervalle de déclenchement à froid : quinze minutes.

Ces résultats montrent l'efficacité importante du procédé selon l'invention.

On décrira maintenant ci-après plusieurs moyens de base et quelques variantes destinés à mettre en oeuvre le procédé ci-dessus dans divers appareils de chauffage.

Le terme "foyer" utilisé ci-après désigne de façon générale le lieu de la combustion. Ce terme doit être compris comme une enceinte de chauffage composée principalement de la chambre de combustion et des organes annexes, mais en tout cas le strict lieu où s'effectue la combustion principale, à savoir celle normale du combustible solide.

Dans un poêle à bois ou un foyer fermé de cheminée présentant un foyer métallique 1 du type boîte constituant une chambre de combustion 2 au-dessus d'une grille à cendres 3, on prévoit, en aval du foyer, à l'extérieur du foyer, dans le sens des fumées, une chambre de postcombustion 4, voisine du foyer, par exemple de la sortie des fumées, chambre disposée à proximité du foyer, selon un mode de réalisation, attenante au foyer, à l'arrière de celui-ci sur un trajet 5 des fumées, par exemple incurvé vers le bas. Cette chambre de postcombustion est séparée du foyer par une plaque ou une paroi métallique 6.

Comme on le verra ci-après, de nombreux autres emplacements de la chambre s'avèrent possibles. Il convient simplement de la disposer le plus près possible de la sortie des fumées mais à l'extérieur du foyer.

La chambre de postcombustion 4 comporte une ouverture, par exemple latérale, servant d'entrée 7 par laquelle débouche un canal aéraulique 8 d'amenée d'air neuf ou air secondaire provenant de la pièce d'habitation dans laquelle se trouve le foyer ou de l'extérieur. Ce canal est occupé sur toute une section droite par un bloc électrique chauffant 9 traversé par le flux d'air neuf préchauffé ou non, réalisé avantageusement sous la forme d'une cartouche chauffante équipée de résistances chauffantes électriques.

Comme on le verra ci-après, on prévoit une variante à plusieurs canaux, soit indépendants soit en canal double, dont un des canaux est occupé par un bloc électrique permettant un chauffage électrique de plus faible puissance.

La chambre de combustion comporte également une entrée et une sortie des fumées.

Avantageusement, l'air est prélevé dans la pièce et préchauffé au contact des parois du foyer ou au contact des fumées, par l'intermédiaire d'un échangeur, après leur sortie du foyer jusqu'à la chambre de postcombustion, puis chauffé par un moyen de chauffage électrique à la température désirée.

Ainsi, sur le plan des moyens, selon une variante intéressante, le circuit de préchauffage de l'air neuf est attenant au circuit d'évacuation des fumées depuis sa sortie du foyer jusqu'a la chambre de postcombustion.

Bien entendu, l'élément de chauffage électrique est situé en aval au voisinage de l'entrée de la chambre de postcombustion.

Il s'agit de la température de déclenchement, c'est-à-dire celle déclenchant la postcombustion dans la phase initiale puis de la température d'auto-entretien.

Le courant d'air est naturel ou forcé par un ventilateur ou une turbine 10 à partir d'une entrée d'air obturable totalement ou partiellement.

L'ensemble de commande et de régulation en énergie électrique des moyens de chauffage du flux d'air injecté se compose, par exemple, dans la version de base, de deux capteurs de température 11 et 12 montés respectivement dans la chambre de combustion 2 et dans la chambre de postcombustion 4. Ces capteurs sont reliés à un circuit électronique de commande 13 agissant sur l'alimentation en énergie électrique des moyens de chauffage de l'air secondaire et, éventuellement sur son débit, par l'intermédiaire du ventilateur ou de la turbine 10.

Le capteur 11 de la chambre de combustion 2 détecte la montée en température pour commander les moyens de chauffage de l'air secondaire. Le deuxième capteur 12, monté dans la chambre de postcombustion est un capteur de sécurité qui transmet au circuit de commande le signal de début et de fin d'autocombustion, permettant de vérifier à tout moment le bon fonctionnement et de commander l'arrêt ou la diminution de l'énergie électrique de chauffage. Un autre capteur de sécurité 14 peut exister sur le circuit d'injection de l'air qui renseigne sur le fonctionnement de la cartouche chauffante.

De façon avantageuse, la cartouche chauffante peut être constituée par une structure en nids d'abeilles réalisée, par exemple, par moulage d'une matière en carbure de silicium, placée dans le canal aéraulique sur toute une section droite pour être traversée complètement par le flux d'air secondaire.

On peut également utiliser des circuits surfaciques ou des dépots résistifs. De simples résistances électriques bobinées conviennent également.

Selon une réalisation particulière, on prévoit en plus de la cartouche chauffante ou isolément, un générateur d'ozone 15 à la sortie du conduit ou canal aéraulique 8 d'amenée de l'air neuf préchauffé, comme le montre la figure 2.

L'entrée d'air du circuit d'amenée de l'air neuf est obturable partiellement ou totalement par un volet 16 ou autre dispositif commandé à partir des capteurs 12 et 14.

Le procédé mis en oeuvre par les moyens décrits ci-dessus se particularise par les caractéristiques suivantes.

On injecte latéralement dans la chambre de postcombustion 4 située au-delà du foyer un flux d'air neuf porté rapidement, pendant la phase de début de combustion, à une température d'au moins 400°C jusqu'à déclenchement de l'autocombustion dans la chambre de postcombustion. Ce flux d'air secondaire est chauffé par des moyens électriques de chauffage, par exemple par une cartouche chauffante disposée dans le canal aéraulique 8 d'injection d'air secondaire prélevé à l'extérieur, cartouche equipée d'une série de résistances électriques selon la puissance requise. Elle est, par exemple, traversée entièrement par le flux d'air.

Cet air secondaire est, de préférence, préalablement préchauffé le long des parois du foyer ou par la chaleur des fumées. Il contient un pourcentage minimal d'oxygène de 6 % mais de préférence compris entre 12 % et 16 %.

On détecte la montée en température du foyer 1 par le capteur 11 pour commander automatiquement les moyens électriques de chauffage du flux d'air injecté.

On détecte l'autocombustion pour ramener la température du flux d'air à une valeur minimale située entre 200°C et 400°C.

On commande, à chaque remontée en température de la chambre de combustion, une nouvelle phase de chauffage du flux d'air a une température d'au moins 400° C, par exemple 500° C, jusqu'à l'autocombustion, c'est-à-dire l'auto-entretien de la postcombustion, correspondant à chaque réactivation du feu détectée par le capteur de température 12 dans la chambre de postcombustion 4.

On examinera maintenant, en référence aux figures de 3 a 8, des réalisations particulières mettant en oeuvre le procédé selon l'invention.

Selon la variante représentée sur la figure 3, la chambre de postcombustion 4 du foyer fermé 1 est intégrée au foyer, à sa partie arrière. Elle présente une entrée 17 pour le passage de sortie des fumées.

Elle est conformée en chicane par une séparation 18 et constitue le trajet de sortie des fumées en fonctionnement permanent du foyer.

Classiquement, un clapet d'évacuation directe des fumées permet l'évacuation d'urgence ou de sécurité par exemple.

Le circuit d'amenée de l'air secondaire est formé, par exemple, d'un conduit 19 raccordé à son extrémité extérieure à un ventilateur 20 et débouchant à son autre extrémité au niveau de l'entrée 17 de la chambre de postcombustion.

Le conduit renferme le bloc électrique chauffant 9 représenté sous la forme d'un bobinage électrique.

Le conduit vient de l'extérieur du foyer sous la chambre de postcombustion et remonte le long de la paroi arrière du foyer.

Pour assurer le préchauffage, au moins une surface du conduit est en contact avec la paroi du foyer.

Selon la variante représentée sur la figure 3, la chambre de postcombustion 4 du foyer fermé 1 est intégrée en partie supérieure du foyer.

Cette chambre communique avec un échangeur supérieur 21 vers un conduit d'évacuation 22.

Le circuit d'amenée de l'air secondaire est un canal 23 qui passe derrière la paroi arrière du foyer, celle-ci constituant, par exemple, une de ses faces latérales.

L'air secondaire entre dans le canal, à sa base, par aspiration naturelle dans le canal occupé sur une partie de sa longueur par le bloc chauffant 9 et débouche en 24 en partie supérieure dans la chambre de postcombustion 4.

De même, le foyer débouche en 25 en partie supérieure dans la chambre de postcombustion 4.

On décrira maintenant une variante modulaire en référence aux figures 5a et 5b dans laquelle l'air secondaire est réchauffé dans un échangeur au contact des fumées.

L'ensemble forme un bloc modulaire 26 à monter au-dessus d'un appareil de chauffage, notamment d'un foyer fermé de cheminée.

Ce module constitue une simple partie supérieure au-dessus du foyer fermé sur lequel il vient se monter. Il suffit de le solidariser ou de le fixer mécaniquement et de le raccorder aérauliquement au conduit d'évacuation des fumées sortant de l'appareil.

Outre sa configuration générale en module, il présente la particularité de constituer un échangeur concentrique entre les fumées et l'air secondaire.

Plus particulièrement, le module de postcombustion représenté se compose d'un circuit extérieur 27 entourant un circuit intérieur 28 tel que représenté sur les figures 5a et 5b. Les deux circuits sont disposés en juxtaposition côte à côte. Le circuit extérieur 26 amène l'air secondaire à la chambre de postcombustion. Il comprend le bloc chauffant 9. Le circuit intérieur 28 est celui d'évacuation des fumées à partir du foyer. Ce dernier débute à une sortie 29 d'un caisson collecteur 30. La sortie débouche dans la chambre de postcombustion 4 présentant une autre entrée 31 à proximité du bloc chauffant 9 constituant la fin du circuit extérieur 27.

Le circuit intérieur des fumées se développe en montant pour atteindre une chambre de sortie 32 communiquant avec un conduit d'évacuation 33.

Un clapet 34 d'évacuation directe des fumées est en outre prévu entre le caisson de regroupement et la chambre de sortie 32.

Cette variante utilise la chaleur contenue dans les fumées pour préchauffer l'air secondaire.

Elle constitue un des échangeurs les plus performants et les mieux adaptés.

On décrira maintenant deux variantes mettant en oeuvre la postcombustion étagée c'est-à-dire le fractionnement du circuit d'amenée de l'air secondaire ou air neuf en deux circuits distincts, l'un dit de chauffage 35 comportant le bloc chauffant 9 et l'autre dit de préchauffage 36.

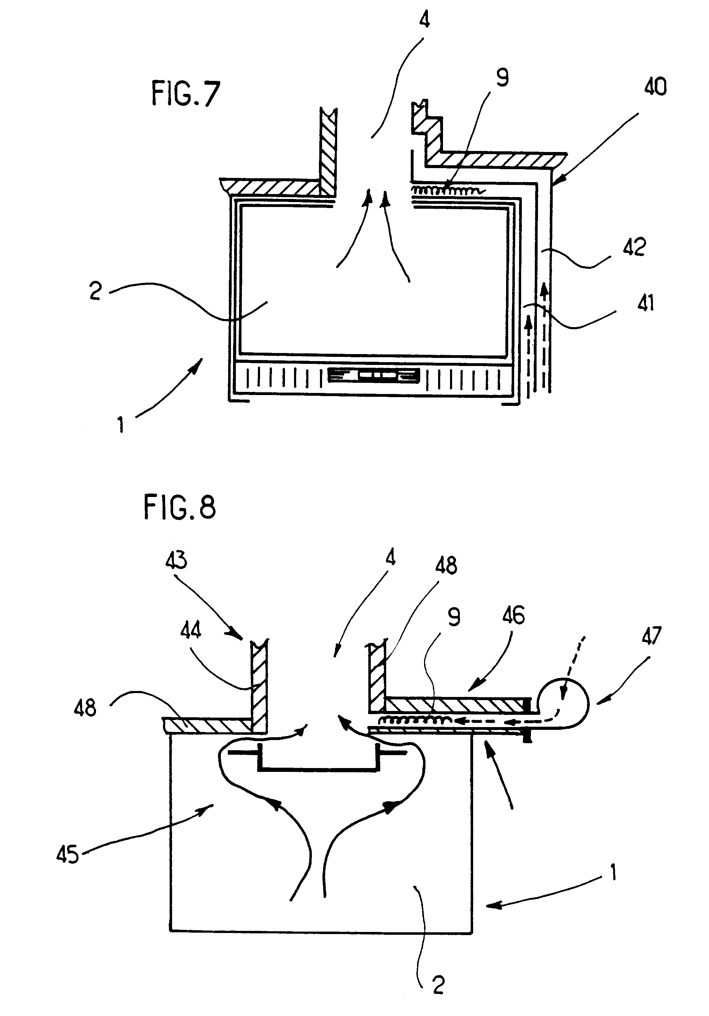

Il s'agit des variantes représentées sur les figures 6 et 7.

La variante représentée sur la figure 6 comporte deux canaux séparés décalés en hauteur de manière à réaliser l'injection de l'air secondaire à des niveaux différents.

On forme ainsi dans la chambre de postcombustion une première zone d'injection 37 inférieure d'air secondaire à température élevée et une deuxiéme zone d'injection 38 supérieure à la première à température plus faible.

Dans la première zone débouche un conduit de chauffage 39 pourvu du bloc de chauffage 9 apportant l'air neuf à température élevée, par exemple 500° C. Dans la deuxième zone d'injection 38 débouche un autre conduit, distinct du premier, longeant par exemple la paroi du foyer en vue de préchauffer l'air.

La variante représentée sur la figure 7 est du type à canal double 40 longeant le foyer. Le canal double 40 est partagé en deux canaux parallèles 41 et 42 disposés côte à côte respectivement canal de chauffage et canal de préchauffage.

Le canal de chauffage est équipé au niveau de sa sortie du bloc chauffant 9. Il débouche dans la chambre de postcombustion 4 à un niveau inférieur. La température de l'air neuf éjecté s'établit à celle déterminée pour le déclenchement de la postcombustion, par exemple 500° C.

Le canal de préchauffage est libre. Il débouche dans la chambre de postcombustion à un niveau supérieur. La température de l'air neuf éjecté est inférieure au seuil de déclenchement de la postcombustion située entre 200° C et 400° C.

Une dernière variante représentée sur la figure 8 est dite à évacuation.

Cette variante s'applique à un foyer à conduit de fumées 43 présentant une naissance 44 débouchant d'une boîte à fumées 45.

Selon la caractéristique particulière de cette variante, la chambre de postcombustion 4 est constituée par ou intégrée à la naissance 44 du conduit de fumées 43. Un canal aéraulique 46 débouche latéralement dans le conduit de fumées 43 à la base de celui-ci. Ce conduit transporte de l'air neuf par exemple soufflé par l'intermediaire d'un ventilateur 47. canal de chauffage 46 peut être unique ou doublé d'un canal de préchauffage comme dans certaines variantes décrites ci-dessus.

Bien entendu, ce mode d'exécution nécessite une naissance 44 de conduit de fumées de constitution adaptée. En effet, la chaleur dégagée par la postcombustion est suffisamment importante pour devoir être évacuée de façon plus rapide que par le simple rayonnement.

Ainsi, le métal constituant la naissance du conduit de fumées sera résistant aux hautes températures et on utilisera de préférence la naissance 44 comme élément central d'un échangeur de chaleur ou on l'isolera thermiquement par un revêtement épais 48.

Diverses autres possibilités existent comme par exemple un embout à ailettes sur lequel est projeté de l'air soufflé.

## Revendications

1. Procédé de combustion des gaz et matières volatiles imbrûlés issus de la combustion de combustibles solides dans une chambre de combustion (2) d'un foyer (1) d'un appareil de chauffage, chaudière, incinérateur ou analogue, dans une chambre de postcombustion (4), avec apport simultané d'air comburant et de chaleur, caractérisé en ce que :
. on injecte, à au moins un niveau, par au moins un canal aéraulique (8) débouchant dans la chambre de postcombustion (4) située le plus près possible de la sortie du foyer (1), un flux d'air neuf comburant préalablement chauffé dans le canal aéraulique (8) par un moyen de chauffage indépendant de l'énergie du foyer sous la forme d'un élément chauffant (9) et extérieur à la chambre de postcombustion (4),
. on déclenche la combustion totale des matières volatiles imbrûlées dans la chambre de postcombustion (4) en portant rapidement, dans le canal aéraulique (8), ce flux à une température d'au moins 400°C,
. on détecte le maintien de l'auto-entretien de la combustion totale dans cette chambre de postcombustion (4) par un capteur (12) situé dans cette chambre relié au circuit de commande du moyen de chauffage,
. on diminue ensuite la température de l'air neuf injecté jusqu'à une valeur minimale,
. on porte à nouveau la température du flux d'air neuf injecté à une température d'au moins 400°C à chaque remontée en température de la chambre de combustion (2) du foyer (1) provoquée par une réactivation du feu, détectée par un capteur (11) placé dans la chambre de combustion (2), et transmise au circuit de commande du moyen de chauffage,
. on diminue à nouveau la température du flux d'air neuf injecté.

2. Procédé selon la revendication 1, caractérisé en ce que le moyen de chauffage indépendant de l'énergie du foyer (1) est associé à un moyen de préchauffage utilisant l'énergie du foyer (1) ou celle contenue dans les fumées.

3. Procédé selon l'une des revendications précédentes, caractérisé en ce que l'air neuf est injecté à deux niveaux différents dans la chambre de postcombustion (4), le niveau inférieur étant celui provenant du moyen de chauffage indépendant.

4. Procédé selon l'une des revendications précédentes, caractérisé en ce que le moyen de chauffage indépendant est électrique.

5. Procédé selon l'une des revendications précédentes, caractérisé en ce que la quantité relative d'oxygène dans le flux d'air neuf est supérieure à 6 %, par exemple comprise entre 12 et 16 %.

6. Procédé selon l'une des revendications précédentes, caractérisé en ce que le flux d'air neuf injecté est enrichi en oxygène actif.

7. Procédé selon l'une des revendications précédentes, caractérisé en ce que le flux d'air est enrichi en ozone ou par un gaz ou un complexe gazeux catalytique ou oxydant favorisant la combustion.

8. Procédé selon l'une des revendications précédentes, caractérisé en ce que le flux d'air neuf est forcé par un ventilateur ou une turbine avec interposition sur l'entrée d'air d'un élément d'obturation mobile.

9. Appareil de chauffage, chaudière, incinérateur ou analogue convenant à la mise en oeuvre du procédé ci-dessus revendiqué, comprenant une chambre de combustion (2) d'un foyer (1) et une chambre de postcombustion (4) avec apport simultané d'air comburant et de chaleur, caractérisé en ce que la chambre de postcombustion (4) est située le plus près possible de la sortie des fumées du foyer (1), et en ce qu'il comprend au moins un canal aéraulique (8) d'injection d'air neuf dans la chambre de postcombustion (4) ainsi qu'au moins un moyen de chauffage indépendant de l'énergie du foyer sous la forme d'un élément chauffant (9) et extérieur à la chambre de postcombustion (4) situé dans le canal aéraulique d'injection (8), pour porter cet air à une température de valeur minimale égale à 400°C, commandé par un circuit de commande à partir d'un capteur (11) de détection de la montée en température du foyer (1) situé dans la chambre de combustion (2) et d'un capteur (12) de détection de l'autocombustion dans la chambre de postcombustion (4) situé dans cette chambre.

10. Appareil selon la revendication 9, caractérisé en ce que le moyen de chauffage indépendant de l'énergie du foyer (1) est associé à un moyen de préchauffage utilisant l'énergie du foyer (1) ou celle contenue dans les fumées.

11. Appareil selon la revendication 10, caractérisé en ce que le moyen de préchauffage est un échangeur de chaleur avec la chambre de combustion (2), intégré au foyer(1).

12. Appareil selon la revendication 10, caractérisé en ce que le moyen de préchauffage est un échangeur de chaleur avec les fumées, échangeur placé entre la sortie des fumées du foyer (1) et la chambre de postcombustion (4).

13. Appareil selon la revendication 12, caractérisé en ce que l'échangeur est formé d'un circuit extérieur (27) pour l'air neuf et d'un circuit intérieur (28) pour les fumées, les deux circuits étant juxtaposés et concentriques.

14. Appareil selon l'une des revendications de 9 à 13, caractérisé en ce que le canal aéraulique (8) d'amenée de l'air neuf se partage en un circuit de chauffage contenant le moyen de chauffage indépendant et en un circuit de préchauffage.

15. Appareil selon l'une des revendications 9 à 14, caractérisé en ce que le moyen de chauffage indépendant est électrique.

16. Procédé selon la revendication 15, caractérisé en ce que le moyen de chauffage est réalisé sous la forme d'un bloc chauffant (9) selon une cartouche pourvue de résistances électriques occupant toute la section droite du canal aéraulique (8).

17. Appareil selon l'une des revendications 9 à 16, caractérisé en ce que la chambre de postcombustion (4) est attenante au foyer (1) séparée de celui-ci par une paroi métallique (6).

18. Appareil selon l'une des revendications de 9 à 16, caractérisé en ce que la chambre de postcombustion (4) est la sortie du foyer (1).

19. Appareil selon l'une des revendications 9 et 18 caractérisé en ce que l'échangeur, la chambre de postcombustion (4) et l'arrivée et le départ des fumées avant et après la chambre de postcombustion (4) constituent un ensemble unitaire modulaire à monter sur un foyer fermé de cheminée.

## Claims

1. Combustion method for gases and unburnt volatile substances obtained from the combustion of solid fuel in a combustion chamber (2) of a furnace (1) of a heating device, boiler, incinerator or the like, in a post-combustion chamber (4), with oxidant air and heat being provided simultaneously, characterised in that:
. a flow of new oxidant air previously heated in a ventilation duct (8) by a heating means which is independent of the energy of the furnace, in the form of a heating element (9) disposed outside the post-combustion chamber (4) is injected at one level at least, by means of at least one ventilation duct (8) which leads to the post-combustion chamber (4) disposed as close as possible to the outlet of the furnace (1);
. total combustion of the unburnt volatile substances is triggered in the post-combustion chamber (4) by raising the temperature of this flow quickly up to at least 400°C in the ventilation duct (8);
. continuation of the automatic maintenance of total combustion in this post-combustion chamber (4) is detected by means of a probe (12) which is disposed in this chamber and is connected to the control circuit of the heating means;
. the temperature of the new air injected is then reduced to a minimum value;
. the temperature of the new air flow injected is increased once more to a temperature of at least 400°C each time the temperature of the combustion chamber (2) of the furnace (1) is increased by reactivation of the flame, which reactivation is detected by a probe (11) disposed in the combustion chamber (2) and is transmitted to the control circuit of the heating means;
. the temperature of the new air flow injected is decreased once more.

2. Method according to Claim 1, characterised in that the heating means independent of the energy of the furnace (1) is associated with a pre-heating means using the energy of the furnace (1) or that of the exhaust gases.

3. Method according to any one of the preceding Claims, characterised in that the new air is injected at two different levels into the post-combustion chamber (4), the lower level being that obtained from the independent heating means.

4. Method according to any one of the preceding Claims, characterised in that the independent heating means is electrical.

5. Method according to any one of the preceding Claims, characterised in that the relative quantity of oxygen in the flow of new air is greater than 6%, and is for example between 12 and 16%.

6. Method according to any one of the preceding Claims, characterised in that the flow of new air injected is enriched with active oxygen.

7. Method according to any one of the preceding Claims, characterised in that the air flow is enriched with ozone or with a gas or catalytic or oxidant gaseous complex which assists combustion.

8. Method according to any one of the preceding Claims, characterised in that the flow of new air is forced by a fan or turbine, a movable shutter component being interposed on the air inlet.

9. Heating device, boiler, incinerator or the like suitable for implementing the above-claimed method, comprising a combustion chamber (2) of a furnace (1) and a post-combustion chamber (4) with oxidant air and heat being provided simultaneously, characterised in that the post-combustion chamber (4) is disposed as close as possible to the exhaust gas outlet of the furnace (1), and in that it comprises at least one ventilation duct (8) for injecting new air into the post-combustion chamber (4) as well as at least one heating means which is independent of the energy of the furnace, is in the form of a heating element (9) outside the post-combustion chamber (4) and is disposed in the injection ventilation duct (8), in order to raise the temperature of this air to a minimum value of 400°C, controlled by a control circuit by means of a probe (11) which is disposed in the combustion chamber (2), and detects the temperature rise in the furnace (1), and a probe (12), which detects the spontaneous combustion in the post-combustion chamber (4), disposed in this chamber.

10. Device according to Claim 9, characterised in that the heating means independent of the energy of the furnace (1) is associated with a pre-heating means which uses the energy of the furnace (1) or that of the exhaust gases.

11. Device according to Claim 10, characterised in that the pre-heating means is a heat exchanger integral with the furnace (1) for exchanging heat with the combustion chamber (1).

12. Device according to Claim 10, characterised in that the pre-heating means is a heat exchanger for exchanging heat with the exhaust gases, and is disposed between the exhaust gas outlet of the furnace (1) and the post-combustion chamber (4).

13. Device according to Claim 12, characterised in that the exchanger consists of an external circuit (27) for the new air and an internal circuit (28) for the exhaust gases, the two circuits being juxtaposed and concentric.

14. Device according to any one of Claims 9 to 13, characterised in that the ventilation duct (8) which supplies the new air is divided into a heating circuit containing the independent heating means, and a pre-heating circuit.

15. Device according to any one of Claims 9 to 14, characterised in that the independent heating means is electric.

16. Method according to Claim 15, characterised in that the heating means is in the form of a heating block (9) comprising a cartridge provided with electrical resistors occupying the entire right-hand section of the ventilation duct (8).

17. Device according to any one of Claims 9 to 16, characterised in that the post-combustion chamber (4) is adjacent the furnace (1) and is separated from the latter by a metal wall (6).

18. Device according to any one of Claims 9 to 16, characterised in that the post-combustion chamber (4) is the outlet of the furnace (1).

19. Device according to either of Claims 9 and 18, characterised in that the exchanger, the post-combustion chamber (4) and the inlet and outlet of the exhaust gases before and after the post-combustion chamber (4) constitute a modular unit to be mounted on a closed smokestack furnace.

## Patentansprüche

1. Verfahren zur Verbrennung von Gasen und unverbrannten flüchtigen Substanzen, die bei der Verbrennung von festen Brennstoffen in einer Verbrennungskammer (2) einer Herdfeuerung (1) eines Heizapparates, eines Heizkessels, einer Verbrennungsanlage oder etwas analogem entstanden sind, in einer Nachbrennkammer (4) unter gleichzeitiger Zufuhr von Verbrennungsluft und Wärme,
**dadurch gekennzeichnet,** daß man:
- auf mindestens einem Niveau über mindestens einen Luftführungskanal (8), der in den, so nah wie möglich am Austritt aus der Kaminfeuerung (1) liegenden Nachbrennraum (4) mündet, einen Strom von frischer Verbrennungsluft hineinbläst, die man vorher in dem Luftführungskanal (8) durch eine von der Energie der Kaminfeuerung unabhängigen Heizeinrichtung in Form eines außerhalb der Nachbrennkammer (4) liegenden Heizelementes (9) vorgewärmt hat,
- die vollständige Verbrennung der flüchtigen unverbrannten Substanzen in der Nachbrennkammer (4) einleitet, indem man diesen Strom in dem Luftführungskanal (8) rasch auf eine Temperatur von mindestens 400°C bringt,
- den Betrieb der automatischen Aufrechterhaltung der vollständigen Verbrennung in dieser Nachbrennkammer (4) durch einen mit der Steuerschaltung der Heizeinrichtung verbundenen, in dieser Kammer angeordneten Sensor (12) anzeigt,
- dann die Temperatur der eingeblasenen Frischluft auf einen Mindestwert reduziert,
- die Temperatur des eingeblasenen Frischluftstromes wieder auf eine Temperatur von mindestens 400°C bringt, und zwar bei jedem durch eine Reaktivierung der Feuerung hervorgerufenen Anstieg der Temperatur des Verbrennungsraumes (2) der Herdfeuerung (1), die ein im Verbrennungsraum (2) angebrachter Sensor (11) anzeigt und in die Steuerschaltung der Heizeinrichtung eingibt,
- die Temperatur des eingeblasenen Frischluftstromes von neuem reduziert.

2. Verfahren nach Anspruch 1,
**dadurch gekennzeichnet,** daß die von der Energie der Herdfeuerung (1) unabhängige Heizeinrichtung mit einer Vorwärmeeinrichtung verbunden ist, welche die Energie der Herdfeuerung (1) oder die in den Abgasen enthaltene nutzt.

3. Verfahren nach einem der vorhergehenden Ansprüche,
**dadurch gekennzeichnet,** daß man die Frischluft in zwei verschiedenen Niveaus in die Nachbrennkammer (4) einbläst, wobei das untere Niveau dasjenige ist, das mit der unabhängigen Heizeinrichtung verbunden ist.

4. Verfahren nach einem der vorhergehenden Ansprüche,
**dadurch gekennzeichnet,** daß die unabhängige Heizeinrichtung eine elektrische ist.

5. Verfahren nach einem der vorhergehenden Ansprüche,
**dadurch gekennzeichnet,** daß der relative Oxygenanteil in dem Frischluftstrom über 6 % liegt, z.B. zwischen 12 und 16 %.

6. Verfahren nach einem der vorhergehenden Ansprüche,
**dadurch gekennzeichnet,** daß der eingeblasene Frischluftstrom mit aktivem Sauerstoff angereichert ist.

7. Verfahren nach einem der vorhergehenden Ansprüche,
**dadurch gekennzeichnet,** daß der Luftstrom mit Ozon oder durch ein Gas oder durch eine gasförmige, katalytische oder oxidierende Verbindung angereichert ist, um die Verbrennung zu begünstigen.

8. Verfahren nach einem der vorhergehenden Ansprüche,
**dadurch gekennzeichnet,** daß man den Frischluftstrom durch einen Ventilator oder eine Turbine beschleunigt, wobei man am Lufteintritt ein bewegliches Verschlußorgan einfügt.

9. Heizapparat, Heizkessel, Verbrennungsofen oder etwas ähnliches, passend zum Durchführen des oben beanspruchten Verfahrens, bestehend aus einer Brennkammer (2), einer Herdfeuerung (1) und einer Nachbrennkammer (4) mit gleichzeitiger Zufuhr von Verbrennungsluft und Wärme,
**dadurch gekennzeichnet,** daß die Nachbrennkammer (4) so nahe wie möglich am Austritt der Rauchgase aus der Herdfeuerung (1) angeordnet ist und daß er mindestens einen Luftführungskanal (8) zum Einblasen von Frischluft in die Nachbrennkammer (4) aufweist sowie mindestens eine von der Energie der Herdfeuerung unabhängige und außerhalb der Nachbrennkammer (4), in dem Lufteinblasekanal (8) angeordnete Heizeinrichtung in Form eines Heizelementes (9), um diese Luft auf eine Temperatur mit einem Minimalwert von 400°C zu bringen, geregelt über eine Steuerschaltung in Abhängigkeit eines Sensors (11), der, in dem Brennraum (2) angeordnet, den Anstieg der Temperatur der Herdfeuerung (1) ermittelt und eines Sensors (12) zur Ermittlung des automatisch ablaufenden Brennvorgangs in der Nachbrennkammer (4), der in dieser Kammer angeordnet ist.

10. Apparat nach Anspruch 9,
**dadurch gekennzeichnet,** daß die von der Energie der Herdfeuerung (1) unabhängige Heizeinrichtung mit einer Vorwärmeeinrichtung verbunden ist, welche die in der Herdfeuerung (1) oder die in den Rauchgasen enthaltene Energie nutzt.

11. Apparat nach Anspruch 10,
**dadurch gekennzeichnet,** daß die Vorwärmeeinrichtung ein in der Herdfeuerung (1) eingebauter Austauscher mit der Wärme der Brennkammer (2) ist.

12. Apparat nach Anspruch 10,
**dadurch gekennzeichnet,** daß die Vorwärmeeinrichtung ein Rauchgaswärme-Austauscher ist, der zwischen dem Austritt der Rauchgase aus der Herdfeuerung (1) und der Nachbrennkammer (4) angeordnet ist.

13. Apparat nach Anspruch 12,
**dadurch gekennzeichnet,** daß der Austauscher aus einem äußeren Kreislauf (27) für die Frischluft und einem inneren Kreislauf (26) für die Rauchgase besteht, wobei die zwei Kreisläufe nebeneinander liegen und konzentrisch sind.

14. Apparat nach einem der Ansprüche 9 bis 13,
**dadurch gekennzeichnet,** daß sich der Luftkanal (8) zum Zuführen von Frischluft aufteilt in einen Heizkreislauf, der die unabhängige Heizeinrichtung enthält und in einen Vorwärmekreislauf.

15. Apparat nach einem der Ansprüche 9 bis 14,
**dadurch gekennzeichnet,** daß die unabhängige Heizung eine elektrische ist.

16. Verfahren nach Anspruch 15,
**dadurch gekennzeichnet,** daß die Heizeinrichtung in Form einer Heizeinheit (9) als mit elektrischen Widerständen versehene Patrone ausgeführt ist, welche den gesamten Querschnitt des Luftführungskanals (8) einnimmt.

17. Apparat nach einem der Ansprüche 9 bis 16,
**dadurch gekennzeichnet,** daß die Nachbrennkammer (4) an die Herdfeuerung (1) angrenzt, wobei sie von dieser durch eine metallische Wand (6) getrennt ist.

18. Apparat nach einem der Ansprüche 9 bis 16,
**dadurch gekennzeichnet,** daß die Nachbrennkammer (4) der Austritt der Herdfeuerung (1) ist.

19. Apparat nach einem der Ansprüche 9 und 18,
**dadurch gekennzeichnet,** daß der Austauscher, die Nachbrennkammer (4) und die Zuführung sowie die Abführung der Rauchgase vor und nach der Nachbrennkammer (4) eine modulare Einheitseinrichtung darstellen, die an eine geschlossene Kaminfeuerung anbaubar ist.
